# EUROPEAN PATENT SPECIFICATION

(11) **EP 4 600 904 B1**
(45) Date of publication and mention of the grant of the patent: **28.10.2026**
(21) Application number: 23874604.4
(22) Date of filing: 12.09.2023
(51) Int. Cl.: G06T 7/73

(54) **INFORMATION PROCESSING DEVICE, SYSTEM, INFORMATION PROCESSING METHOD, AND PROGRAM**
INFORMATIONSVERARBEITUNGSVORRICHTUNG, SYSTEM, INFORMATIONSVERARBEITUNGSVERFAHREN UND PROGRAMM
DISPOSITIF DE TRAITEMENT D'INFORMATIONS, SYSTÈME, PROCÉDÉ DE TRAITEMENT D'INFORMATIONS ET PROGRAMME

(30) Priority: 05.10.2022 JP 2022160971
(43) Date of publication of application: 13.08.2025
(73) Proprietor: Sony Group Corporation, Tokyo 108-0075 (JP)
(72) Inventor: KONNO, Yosuke, Tokyo 108-0075 (JP)
(74) Representative: MFG Patentanwälte Meyer-Wildhagen Meggle-Freund Gerhard PartG mbB
(86) International application number: PCT/JP2023/033194
(87) International publication number: WO 2024/075475

(56) References cited:
- WO-A1-2020/138345
- JP-A- 2008 070 319
- JP-A- 2008 224 626
- JP-A- 2008 275 340
- PARK CHANHO ET AL: "Strategy for Creating AR Applications in Static and Dynamic Environments Using SLAM- and Marker Detector-Based Tracking", COMPUTER MODELING IN ENGINEERING & SCIENCES, vol. 131, no. 1, 1 January 2022 (2022-01-01), pages 529 - 549, XP093346317, ISSN: 1526-1506, DOI: 10.32604/cmes.2022.019214
- CACCAMO SERGIO ET AL: "Joint 3D Reconstruction of a Static Scene and Moving Objects", 2017 INTERNATIONAL CONFERENCE ON 3D VISION (3DV), IEEE, 10 October 2017 (2017-10-10), pages 677 - 685, XP033353275, DOI: 10.1109/3DV.2017.00082

## Description

### TECHNICAL FIELD

The present disclosure relates to an information processing device, a system, an information processing method, and a program.

### BACKGROUND ART

A technique for estimating a three-dimensional structure of a predetermined subject from a plurality of two-dimensional images including the subject is known. The above-described technique includes, for example, a technique called structure from motion (SfM) described in Non-Patent Document 1.

### CITATION LIST

### NON-PATENT DOCUMENT

Non-Patent Document 1: Roger Mohr, 2 others, "Relative 3D Reconstruction Using Multiple Uncalibrated Images", The International Journal of Robotics Research, SAGE Publications, 1995, 14 (6), pp. 619-632, December 1, 1995;

Non-Patent Document 2: PARK CHANHO ET AL, "Strategy for Creating AR Applications in Static and Dynamic Environments Using SLAM- and Marker Detector-Based Tracking", COMPUTER MODELING IN ENGINEERING & SCIENCES, 2021, Tech Science Press, vol. 131(1), pp. 529-549;

Non-Patent Document 3: Sergio Caccamo et al., "Joint 3D Reconstruction of a Static Scene and Moving Objects", 2017 INTERNATIONAL CONFERENCE ON 3D VISION (3DV), 10 October 2017, IEEE, pp. 677-685;

### SUMMARY OF THE INVENTION

### PROBLEMS TO BE SOLVED BY THE INVENTION

Furthermore, there is a case where the processing result of the SfM is used in estimation of the position and orientation of a camera. Here, in a case where a movable marker group of which position changes is used in the estimation of SfM processing, calibration is required every time the movable marker group moves, and there is a possibility that the processing time increases.

### SOLUTIONS TO PROBLEMS

According to one aspect of the present disclosure, there is provided an information processing device including: a processing unit that rewrites second map data including position information of a plurality of movable markers arranged on a movable rigid body, on the basis of a first position and orientation related to a camera, the first position and orientation being estimated on the basis of an image captured by the camera and first map data including position information of a plurality of fixed markers arranged on a non-movable body, and a second position and orientation related to the camera, the second position and orientation being estimated on the basis of the image and the second map data.

Furthermore, according to another aspect of the present disclosure, there is provided an information processing method including: rewriting, by a processor, second map data including position information of a plurality of movable markers arranged on a movable rigid body, on the basis of a first position and orientation related to a camera, the first position and orientation being estimated on the basis of an image captured by the camera and first map data including position information of a plurality of fixed markers arranged on a non-movable body, and a second position and orientation related to the camera, the second position and orientation being estimated on the basis of the image and the second map data.

Furthermore, according to another aspect of the present disclosure, there is provided a program for causing a computer to function as: an information processing device including a processing unit that rewrites second map data including position information of a plurality of movable markers arranged on a movable rigid body, on the basis of a first position and orientation related to a camera, the first position and orientation being estimated on the basis of an image captured by the camera and first map data including position information of a plurality of fixed markers arranged on a non-movable body, and a second position and orientation related to the camera, the second position and orientation being estimated on the basis of the image and the second map data.

### BRIEF DESCRIPTION OF DRAWINGS

Fig. 1 is a diagram for explaining a configuration example of a system 1 according to a first embodiment of the present disclosure.
Fig. 2 is a block diagram for explaining a functional configuration example of an information processing device 10 according to the embodiment.
Fig. 3 is a diagram for explaining first map data and second map data according to the embodiment.
Fig. 4 is a flowchart illustrating an example of a flow of processing by the system 1 according to the embodiment.
Fig. 5 is a diagram illustrating an example of a user interface for separating a fixed marker 45 and a movable marker 55 according to the embodiment.
Fig. 6 is a diagram for explaining arrangement of a camera 30 in a recalibration phase according to the embodiment.
Fig. 7 is a flowchart illustrating a flow of recalibration processing according to the embodiment.
Fig. 8 is a diagram for explaining calculation of a movement amount of a movable rigid body 50 and rewriting of second map data according to the embodiment.
Fig. 9 is a diagram for explaining an irradiation marker 65 according to a second embodiment of the present disclosure.
Fig. 10 is a diagram illustrating an appropriate distribution example of the irradiation markers 65 according to the embodiment.
Fig. 11 is a diagram illustrating an inappropriate distribution example of the irradiation marker 65 according to the embodiment.
Fig. 12 is a block diagram illustrating a configuration example of a system 2 according to the embodiment.
Fig. 13 is a diagram for explaining evaluation using grids according to the embodiment.
Fig. 14 is a diagram for explaining evaluation using grids according to the embodiment.
Fig. 15 is a flowchart illustrating a setup procedure in a case where a retroreflective material marker is used.
Fig. 16 is a flowchart illustrating a setup procedure in a case where the irradiation marker 65 according to the second embodiment of the present disclosure is used.
Fig. 17 is a diagram for explaining an example of controlling an irradiation pattern in a case where an irradiation device 60 according to the embodiment performs LiDAR.
Fig. 18 is a flowchart illustrating a setup procedure in a case where the irradiation device 60 according to the embodiment performs LiDAR.
Fig. 19 illustrates control of a blinking pattern of the irradiation marker 65 in LiDAR according to the embodiment.
Fig. 20 is a block diagram illustrating a hardware configuration example of an information processing device 90 according to an embodiment of the present disclosure.

### MODE FOR CARRYING OUT THE INVENTION

Hereinafter, preferred embodiments of the present disclosure will be described in detail with reference to the accompanying drawings. Note that, in the present description and the drawings, constituent elements having substantially the same functional configurations will be given the same reference signs, and redundant explanations will be omitted.

Note that the description will be given in the following order.
1. First embodiment
   1.1. Configuration Example
   1.2. Details
2. Second embodiment
   2.1. Configuration example
   2.2. Details
3. Hardware Configuration Example
4. Summary

### <1. First Embodiment>

### <<1.1. Configuration Example>>

As described above, there is a case where the processing result of the SfM is used in estimation of the position and orientation of a camera.

As an example, at the site of video production, it is often required to track the position and orientation of the camera in real time for visual effects (VFX) or the like.

Examples of a technique for real-time tracking of the position and orientation of the camera as described above include a technique for tracking, with a plurality of markers each including a retroreflective material or the like arranged in an imaging space, the markers using an infrared (IR) camera to obtain the position and orientation of the IR camera.

While the above-described technique allows estimation at low cost and in a robust manner, the technique has a problem that calibration of the markers takes a lot of time and effort.

For example, in a case of a studio having a general size, it is not unusual that the calibration of the markers takes about 1 to 2 hours.

Furthermore, in order to perform marker calibration, it is necessary to move the IR camera and capture images in a way that covers all markers arranged within the imaging space. However, since imaging equipment, props, and the like are generally arranged in the imaging space, free movement of the IR camera is limited, and it may be difficult to capture a sufficient image required for the marker calibration.

Furthermore, in recent years, there is a studio in which a display device such as an LED panel is arranged on a wall, a ceiling, or the like for virtual production. In a case where real-time tracking of the position and orientation of the camera is performed in such a studio, a marker may be attached on the LED panel.

Furthermore, at the site of virtual production, there is an increasing demand for moving the LED panel for lighting adjustment or the like according to an imaging scene. However, in the case of the tracking technique simply using the processing result of the SfM, marker calibration processing that takes a long time is required every time the LED panel is moved.

On the other hand, it may be difficult to cause a performer or an imaging staff to stand by during the marker calibration processing that takes a long time from the viewpoint of cost and the like, and as a result, it is not unusual that the LED panel cannot be moved and the range of the imaging method is limited.

The technical idea according to the first embodiment of the present disclosure has been conceived by focusing on the above-described points, and greatly improves the calibration efficiency of the movable marker arranged on the movable rigid body.

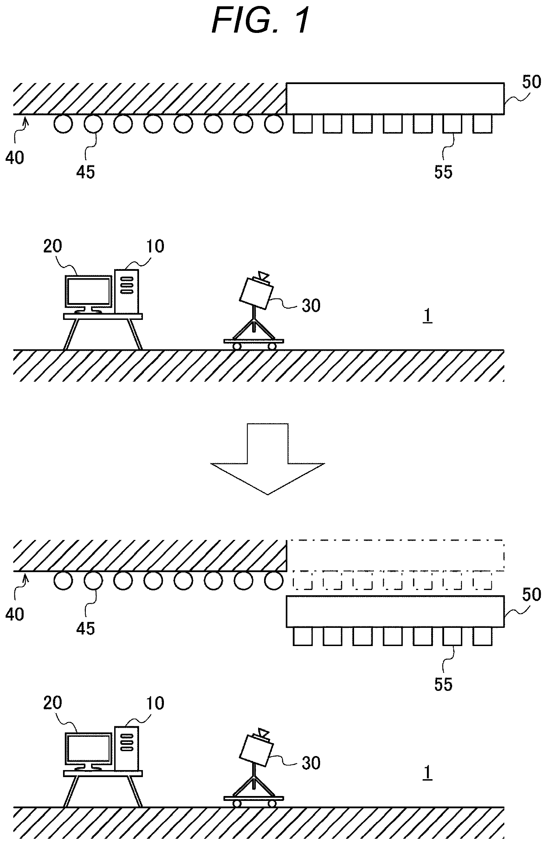

First, a configuration example of a system 1 according to the first embodiment of the present disclosure will be described. Fig. 1 is a diagram for explaining the configuration example of the system 1 according to the first embodiment of the present disclosure.

As illustrated in Fig. 1, the system 1 according to the present embodiment includes an information processing device 10, a display device 20, a camera 30, a non-movable body 40, a plurality of fixed markers 45 arranged on the non-movable body 40, a movable rigid body 50, and a plurality of movable markers 55 arranged on the movable rigid body 50.

### (Information processing device 10)

The information processing device 10 according to the present embodiment is a computer that performs calibration related to the movable marker 55. A detailed configuration of the information processing device 10 according to the present embodiment will be separately described.

### (Display device 20)

The display device 20 according to the present embodiment displays various types of information under the control of the information processing device 10.

### (Camera 30)

The camera 30 according to the present embodiment is, for example, imaging equipment used in virtual production, and is a real-time tracking target.

For example, in a case where the fixed marker 45 and the movable marker 55 are retroreflective materials, the camera 30 includes an element capable of imaging infrared light.

### (Non-movable body 40)

The non-movable body 40 according to the present embodiment is an object such as a rigid body that does not move. In the case of the example illustrated in Fig. 1, the non-movable body 40 is a ceiling in a studio.

### (Fixed marker 45)

The fixed marker 45 according to the present embodiment is a marker that is arranged on the non-movable body 40 and does not operate, that is, has a fixed position. Note that in Fig. 1, the fixed marker 45 is represented by a circle.

The fixed marker 45 according to the present embodiment may be, for example, a retroreflective material, an illumination that can radiate infrared light by itself, or the like.

### (Movable rigid body 50)

The movable rigid body 50 according to the present embodiment is a rigid body which is movable. In the case of the example illustrated in Fig. 1, the movable rigid body 50 is provided to be movable at least in a vertical direction.

The movable rigid body 50 according to the present embodiment may be, for example, a display device such as an LED panel used for virtual production.

### (Movable marker 55)

The movable marker 55 according to the present embodiment is a marker that is arranged on the movable rigid body 50 and changes in position with movement of the movable rigid body 50. Note that in Fig. 1, the movable marker 55 is represented by a square.

Furthermore, one of the features of the plurality of movable markers 55 according to the present embodiment is that a positional relationship between the plurality of movable markers is invariable regardless of the movement of the movable rigid body 50.

The configuration example of the system 1 according to the present embodiment has been described above. However, the configuration described above with reference to Fig. 1 is merely an example, and the configuration of the system 1 according to the present embodiment is not limited to such an example.

For example, the system 1 according to the present embodiment may include a plurality of movable rigid bodies 50 and a plurality of groups of movable markers 55 arranged for each movable rigid body 50.

Furthermore, for example, Fig. 1 illustrates a case where the movable rigid body 50 moves in the vertical direction, but the movable rigid body 50 may move in a horizontal direction or may change in angle.

Furthermore, for example, the movable rigid body 50 may not necessarily be a display device such as an LED panel. The movable rigid body 50 may be various objects having such strength that the positional relationship between the plurality of movable markers 55 to be arranged does not change due to the movement of the movable rigid body.

Furthermore, for example, the movable rigid body 50 may not be arranged above the space. The movable rigid body 50 can be arranged at any place such as the side part or the lower part of the space.

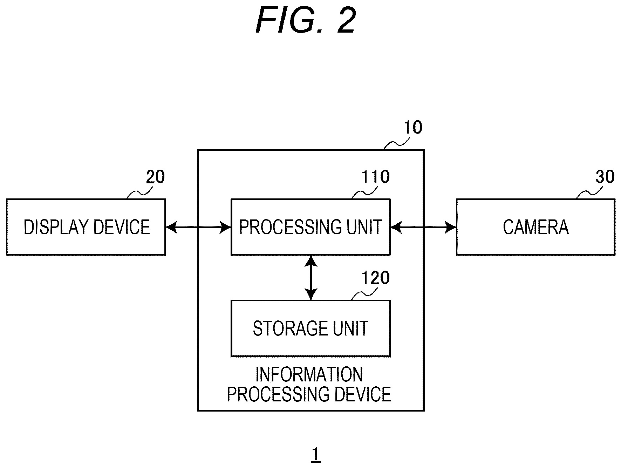

Next, a functional configuration example of the information processing device 10 according to the present embodiment will be described. Fig. 2 is a block diagram for explaining a functional configuration example of the information processing device 10 according to the present embodiment.

As illustrated in Fig. 2, the information processing device 10 according to the present embodiment includes at least a processing unit 110 and a storage unit 120.

### (Processing unit 110)

One of the features of the processing unit 110 according to the present embodiment is that second map data is rewritten on the basis of first position and orientation related to the camera 30, estimated on the basis of the image captured by the camera 30 and first map data, and second position and orientation related to the camera 30, estimated on the basis of the image captured by the camera 30 and the second map data.

The first map data described above is data including position information of the plurality of fixed markers 45 arranged on the non-movable body 40.

Furthermore, the second map data described above is data including position information of the plurality of movable markers 55 arranged on the movable rigid body 50.

Functions of the processing unit 110 according to the present embodiment are implemented by various processors. Details of the functions of the processing unit 110 according to the present embodiment will be separately described.

### (Storage unit 120)

The storage unit 120 according to the present embodiment stores various types of information used by the system 1.

For example, the storage unit 120 according to the present embodiment stores the first map data and the second map data.

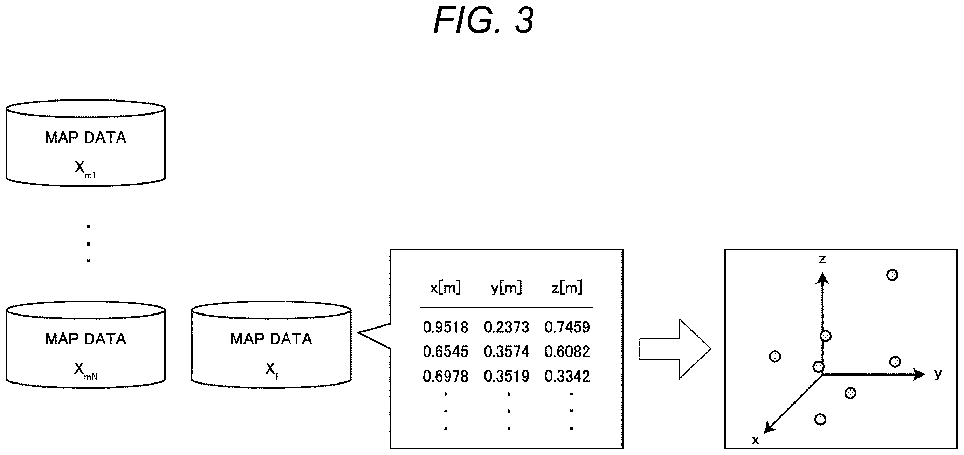

Fig. 3 is a diagram for explaining the first map data and the second map data according to the present embodiment.

Map data X_{f} illustrated in Fig. 3 is an example of the first map data. The map data X_{f} includes three-dimensional coordinate arrays (N_{f}x3(x, y, z)) corresponding to the number N_{f} of the fixed markers 45.

Furthermore, the map data items Xₘ₁ to X_{mN} illustrated in Fig. 3 are examples of the second map data.

As described above, the system 1 according to the present embodiment may include the plurality of movable rigid bodies 50 and the plurality of groups of movable markers 55 arranged on each of the movable rigid bodies 50. In this case, the storage unit 120 may store k (1,..., N) pieces of map data Xₘₖ.

The map data Xₘₖ relates to the k-th group of the movable markers 55 and includes three-dimensional coordinate arrays (Nₖ×3(x, y, z)) corresponding to the number Nₖ of the movable markers 55.

Note that although Fig. 3 illustrates a case where a plurality of pieces of map data is managed independently, the map data according to the present embodiment may be managed as one file by using a column such as a group ID, for example.

The functional configuration example of the information processing device 10 according to the present embodiment has been described above. Note that the functional configuration described above with reference to Fig. 2 is merely an example, and the functional configuration of the information processing device 10 according to the present embodiment is not limited to such an example.

For example, the storage unit 120 according to the present embodiment may be provided in a device separate from the information processing device 10.

Furthermore, the information processing device 10 according to the present embodiment may further include, for example, an operation unit or the like that receives user operation.

The functional configuration of the information processing device 10 according to the present embodiment can be flexibly modified according to specifications, operations, and the like.

### <<1.2. Details>>

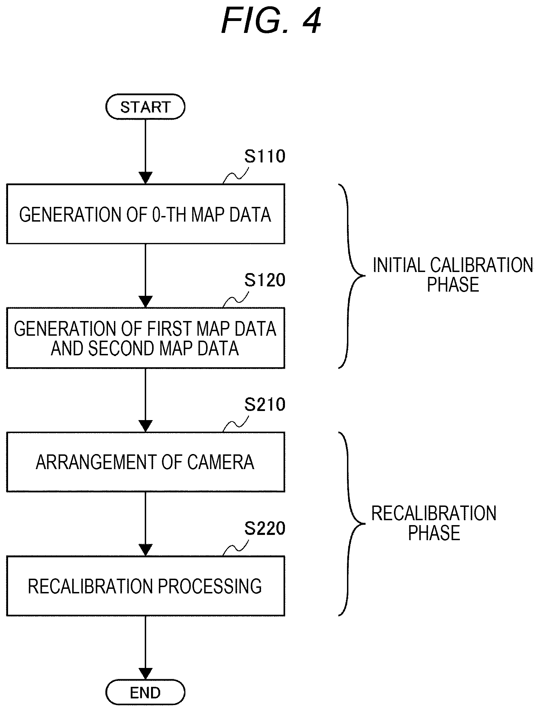

Next, functions of the system 1 according to the present embodiment will be described in detail. Fig. 4 is a flowchart illustrating an example of a flow of processing by the system 1 according to the present embodiment.

As illustrated in Fig. 4, the processing by the system 1 according to the present embodiment is roughly divided into an initial calibration phase and a recalibration phase.

In the initial calibration phase, generation of 0-th map data (S110) and generation of the first map data and the second map data (S120) are performed.

The 0-th map data described above is map data including the position information of the plurality of fixed markers 45 and the position information of the plurality of movable markers 55.

The generation of the 0-th map data in step S110 may be realized by, for example, processing equivalent to the SfM processing disclosed in Non-Patent Document 1.

In step S110, a user uses the camera 30 to capture images so as to cover all the fixed markers 45 and movable markers 55 in various positions and orientations.

Furthermore, the processing unit 110 executes three-dimensional position estimation of each marker from the image captured as described above, and generates 0-th map data.

Furthermore, the processing unit 110 aligns the three-dimensional position information of each marker in a physical space by using the 0-th map data, and performs scale correction and the like.

In subsequent step S120, the processing unit 110 generates the first map data and the second map data from the 0-th map data.

For example, the processing unit 110 may divide the 0-th map data and generate the first map data and the second map data on the basis of separation of the fixed marker 45 and the movable marker 55 by the user.

For this purpose, the processing unit 110 according to the present embodiment may control a user interface for the user to separate the fixed marker 45 and the movable marker 55.

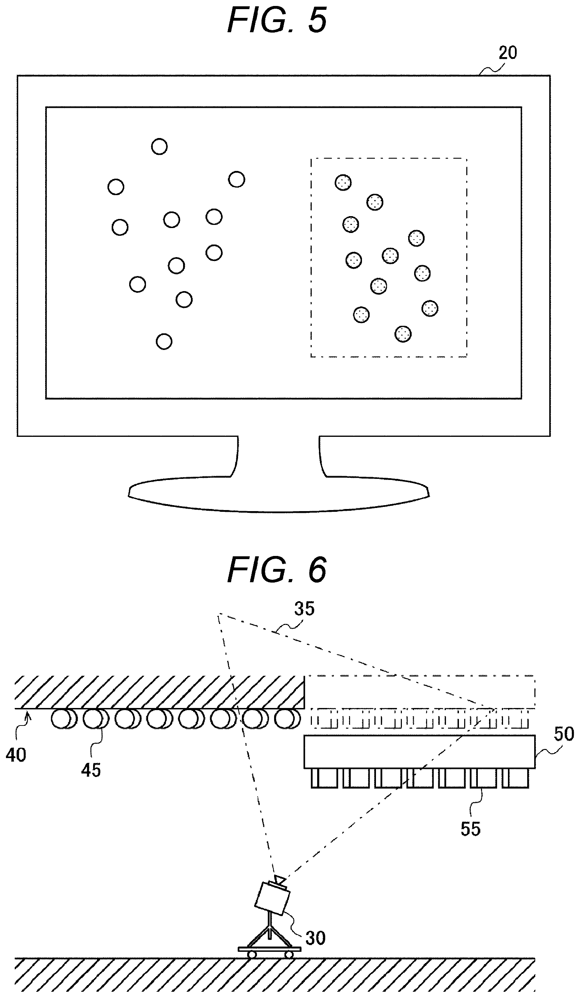

Fig. 5 is a diagram illustrating an example of a user interface for separating the fixed marker 45 and the movable marker 55 according to the present embodiment.

For example, the processing unit 110 may cause the display device 20 to display an image indicating the positional relationship between the markers on the basis of the 0-th map data, and request the user to select only the movable marker 55.

A user who understands the positional relationship between the non-movable body 40 and the movable rigid body 50, the arrangement pattern of the fixed marker 45, and the arrangement pattern of the movable marker 55 can easily separate the fixed marker 45 and the movable marker 55 on the basis of the displayed image. Note that there is no particular limitation on the arrangement pattern of the fixed marker 45 and the movable marker 55 as long as the user can separate the fixed marker 45 and the movable marker 55. In Fig. 5, the movable marker 55 selected by the user is illustrated using a dot pattern.

Note that, in a case where the system 1 includes a plurality of movable rigid bodies 50 and a plurality of groups of movable markers 55, the processing unit 110 requests the user to separate the fixed marker 45 group and the plurality of groups of movable markers 55.

Furthermore, the processing unit 110 may request the user to include at least four markers for each marker group in order to realize the calibration. However, the number of markers included in each marker group may be determined by the required accuracy, and may be, for example, about 10.

On the other hand, in a case where either the fixed marker 45 or the movable marker 55, or both the fixed marker 45 and the movable marker 55 are the illumination that emits infrared light, information that can distinguish between the fixed marker 45 and the movable marker 55 can be transmitted on the infrared light. In this case, it is not always necessary for the user to separate the fixed marker 45 and the movable marker 55, and the processing unit 110 can automatically generate the first map data and the second map data from the 0-th map data on the basis of the information included in the above-described infrared light.

Furthermore, in a case where the non-movable body 40 and the movable rigid body 50 have planes, and the fixed marker 45 and the movable marker 55 are arranged on the respective planes, the separation may be realized by the user labeling each plane detected by the plane detection processing.

Referring again to Fig. 4, the recalibration phase according to the present embodiment will be described.

As illustrated in Fig. 4, in the recalibration phase according to the present embodiment, the arrangement of the camera 30 (S210) and the recalibration processing accompanying the movement of the movable rigid body 50 (S220) are performed. Note that the recalibration phase according to the present embodiment is performed every time the movable rigid body 50 is moved.

Fig. 6 is a diagram for explaining the arrangement of the camera 30 in the recalibration phase according to the present embodiment.

In step S210, the camera 30 is arranged in a position and orientation which allows at least four fixed markers 45 and at least four movable markers 55 arranged on the movable rigid body 50 after the movement to be imaged. Fig. 6 illustrates an angle of view 35 of the camera 30.

However, the predetermined number of markers to be included in the captured image may be determined by the required accuracy, and may be, for example, about 10.

On the other hand, as long as the above-described predetermined number is satisfied, the position and orientation of the camera 30 may be freely set, and the camera 30 is only required to be arranged at a place where imaging can be performed while avoiding equipment and props.

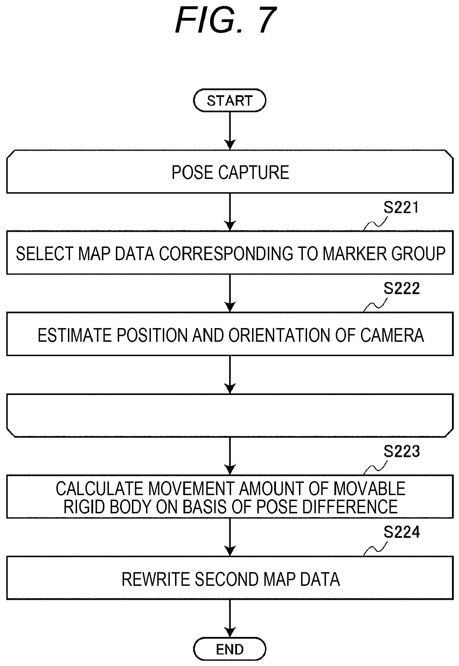

Next, the recalibration processing in step S220 will be described. Fig. 7 is a flowchart illustrating a flow of the recalibration processing according to the present embodiment.

In the recalibration processing according to the present embodiment, capture of a pose (position and orientation) of the camera 30 is performed for each group of fixed markers 45 arranged on the non-movable body 40 and each group of movable markers 55 arranged on the movable rigid body 50.

For example, the processing unit 110 may start the pose capture on the basis of an instruction from the user after the camera 30 is arranged in step S210.

In the pose capture, the processing unit 110 first selects map data corresponding to a marker group to be a target of the pose capture (S221). The processing unit 110 may select the map data on the basis of an input from the user. Even in a case where there are a plurality of movable rigid bodies 50 and a plurality of groups of movable markers 55, the processing unit 110 can automatically complete the subsequent processing as long as information on the movable rigid body 50 that has moved is input.

In a case where the target of the pose capture is a group of the fixed markers 45, the processing unit 110 selects the map data X_{f} in step S221. Note that the map data X_{f} is an example of the first map data.

On the other hand, in a case where the target of the pose capture is the k-th group of the movable markers 55, the processing unit 110 selects the map data Xₘₖ in step S221. Note that the map data Xₘₖ is an example of the second map data.

Next, the position and orientation of the camera 30 are estimated on the basis of the image captured by the camera 30 arranged in step S210 and the map data selected in step S221 (S222).

For example, in a case where the target marker group is a group of the fixed markers 45, the first position and orientation are estimated on the basis of the image captured by the camera 30 and the map data X_{f}.

On the other hand, in a case where the target marker group is the k-th group of the movable markers 55, the second position and orientation are estimated on the basis of the image captured by the camera 30 and the map data Xₘₖ.

The images used for the estimation of the first position and orientation and the second position and orientation in step S222 are images captured by the camera 30 in the same position and orientation arranged in step S210.

Furthermore, as described above, the images used for the first position and orientation and the second position and orientation in step S222 are images including, as subjects, at least a predetermined number of the fixed markers 45 and at least a predetermined number of the movable markers 55.

Note that the estimation of the position and orientation of the camera 30 may be performed by the camera 30 or may be performed by the processing unit 110.

In a case where the pose capture for each target marker group is completed, the processing unit 110 calculates the movement amount of the target movable rigid body 50 (target movable marker 55 group) on the basis of a difference (pose difference) between the first position and orientation and the second position and orientation estimated in step S222 (S223).

Note that, when the estimation of the position and orientation of the camera 30 in step S222 fails, in a case where the movement amount of the movable rigid body 50 calculated in step 223 does not satisfy predetermined accuracy, or the like, the processing unit 110 may request the user to redo the rearrangement and recalibration processing of the camera 30.

On the other hand, in a case where the movement amount of the movable rigid body calculated in step S223 satisfies the predetermined accuracy, the processing unit 110 rewrites the target map data Xₘₖ on the basis of the movement amount of the movable rigid body 50 calculated in step S223 (S224).

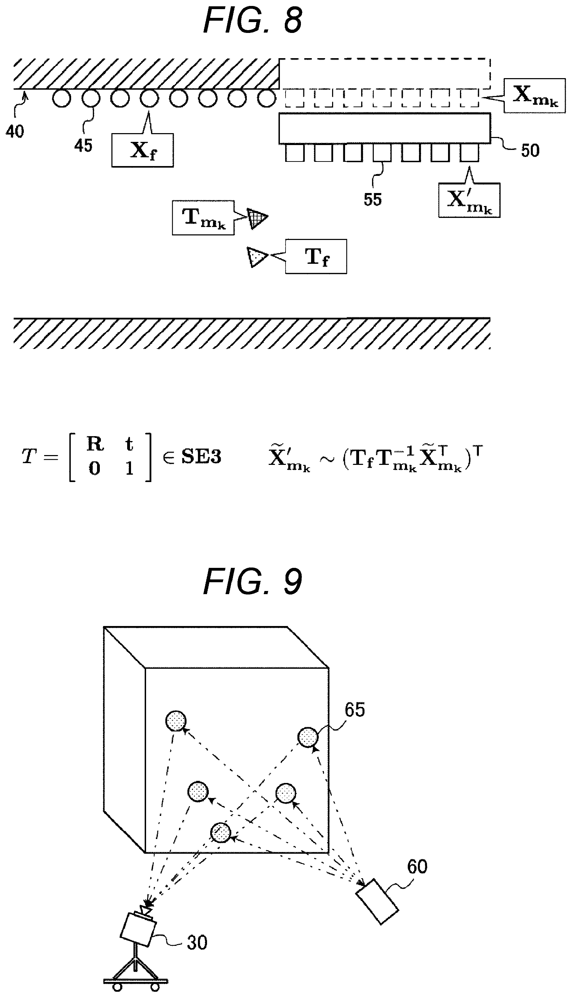

Fig. 8 is a diagram for explaining calculation of the movement amount of the movable rigid body 50 and rewriting of the second map data according to the present embodiment.

In Fig. 8, first position and orientation T_{f} estimated using the map data X_{f} is represented by a dotted triangle. Furthermore, in Fig. 8, second position and orientation Tₘₖ estimated using the map data Xₘₖ is represented by a lattice pattern triangle.

As illustrated in Fig. 8, a difference corresponding to the movement amount of the movable rigid body 50 (movable marker 55 group) occurs between the second position and orientation Tₘₖ estimated using the map data Xₘₖ generated before the movement of the movable rigid body 50 (movable marker 55 group) and the first position and orientation T_{f} estimated using the map data X_{f} not affected by the movement of the movable rigid body 50.

Here, the second map data reflecting the movement of the movable rigid body 50 (movable marker 55 group) is defined as X'ₘₖ. Moreover, in a case where the position and orientation of the camera 30 are represented by the rigid body transform of SE3 as illustrated on the lower left side of Fig. 8, the map data X'ₘₖ reflecting the movement of the movable rigid body 50 can be obtained by a mathematical expression illustrated on the lower right side of Fig. 8. At this time, it is assumed that ~X'ₘₖ and ~Xₘₖ are homogeneous coordinate representations of map data, and the operator ~ connecting both sides represents an equivalence relationship therebetween. Note that T_{f}Tₘₖ⁻¹ in the mathematical expression is a rigid body transform representing a change in position and orientation of the movable rigid body 50 in 6 degrees of freedom.

As described above, the processing unit 110 according to the present embodiment can rewrite the target map data Xₘₖ on the basis of the movement amount of the movable rigid body 50.

According to the recalibration processing described above, it is not necessary to move around in the studio in order to image all the markers, and furthermore, even in a case where the map data Xₘₖ is rewritten, alignment to the physical space is unnecessary.

Therefore, in a typical large-scale studio, the recalibration processing can be completed in about several minutes, and time and effort can be greatly reduced. Furthermore, with this arrangement, it becomes realistic to move the movable rigid body 50 such as the LED panel according to the imaging scene, thereby expanding the range of the imaging method.

Note that, in the above description, a case where the recalibration processing is performed while the camera 30 is fixed in a certain position and orientation has been exemplified. However, the recalibration processing according to the present embodiment is not limited to such an example.

The recalibration processing according to the present embodiment may be continuously performed for each imaged frame. For example, the processing unit 110 can rewrite the map data Xₘₖ with an estimation result with the smallest error.

In this case, the user can perform the recalibration processing only by roughly swinging the camera 30 without worrying about the position and orientation of the camera 30.

### <2. Second Embodiment>

### <<2.1. Configuration Example>>

Next, a second embodiment of the present disclosure will be described.

In the first embodiment, a case where the fixed marker 45 and the movable marker 55 are retroreflective materials, illumination that can radiate infrared light by itself, or the like has been described.

However, in the case of using a material or a device as described above as a marker, work of attaching a large amount of markers in a space is required.

Since the marker attaching work generally requires several hours or more, it is not realistic to attach the markers again according to the imaging scene, the imaging situation, and the like.

Furthermore, in the imaging environment, in a case where the camera 30 cannot capture the markers due to shielding of the marker by a set, equipment, or the like, real-time tracking of the position and orientation of the camera 30 is also not possible.

In this regard, in the second embodiment of the present disclosure, an irradiation marker 65 irradiated by the irradiation device 60 is used for real-time tracking of the position and orientation of the camera 30.

Fig. 9 is a diagram for explaining the irradiation marker 65 according to the second embodiment of the present disclosure.

In a case where a retroreflective material is used as the marker, a configuration is general in which infrared light is radiated in all directions using an IR flash light or the like mounted on the same housing (camera rig or the like) as that of the camera 30, and the light is collected by the retroreflective material.

On the other hand, as illustrated in Fig. 9, the irradiation device 60 according to the present embodiment radiates infrared laser light from an arbitrary installation place in a set pattern. According to this, the irradiation marker 65 is formed at a position where the above-described infrared laser light is reflected by the object.

By imaging the plurality of irradiation markers 65 formed as described above with the camera 30, the position and orientation of the camera 30 can be tracked in real time.

According to the irradiation marker 65 according to the present embodiment, the marker attachment work as described above is unnecessary, so that the time required for setup can be significantly shortened.

Furthermore, rearrangement of markers according to an imaging scene, an imaging situation, and the like, which has not been realistic so far, can be easily realized.

Furthermore, since rearrangement of the marker can be easily realized, shielding of the marker can be easily avoided even in a case where the camera 30 cannot image the marker due to shielding of the marker by a set, equipment, or the like.

Furthermore, as described above, the irradiation device 60 according to the present embodiment does not need to be provided in the same housing (camera rig or the like) as that of the camera 30, and can be arranged at any place. Therefore, it is possible to reduce the size and weight of a device mounted on a housing such as a camera rig.

However, in a case where the irradiation marker 65 is used for real-time tracking of the position and orientation of the camera 30, in order to ensure the estimation accuracy of the position and orientation of the camera 30, it is required to make the distribution of the irradiation marker 65 appropriate.

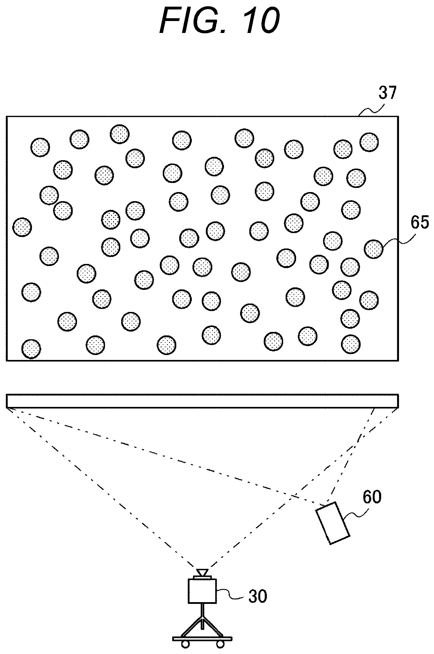

Fig. 10 is a diagram illustrating an appropriate distribution example of the irradiation markers 65 according to the present embodiment.

The lower part of Fig. 10 illustrates an example of the irradiation range of the irradiation marker 65 by the irradiation device 60 and the angle of view of the camera 30. Furthermore, the upper part of Fig. 10 illustrates an example of an image 37 captured by the camera 30 in the situation illustrated in the lower part.

In the image 37 illustrated in Fig. 10, the irradiation markers 65 are substantially evenly distributed over the entire image region.

In order to achieve tracking of the position and orientation of the camera 30 with high accuracy, it is generally desirable that the markers are substantially evenly distributed over the entire image (however, this does not include a state of being aligned at equal intervals) as illustrated in Fig. 10.

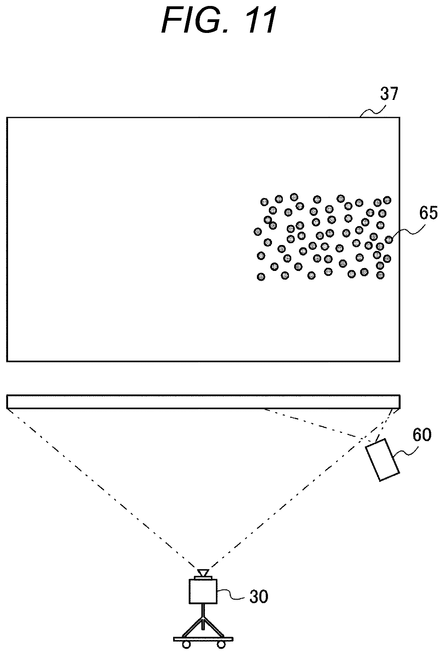

On the other hand, Fig. 11 is a diagram illustrating an inappropriate distribution example of the irradiation marker 65 according to the present embodiment.

The lower part of Fig. 11 illustrates another example of the irradiation range of irradiation marker 65 by the irradiation device 60 and the angle of view of the camera 30. Furthermore, the upper part of Fig. 11 illustrates an example of the image 37 captured by the camera 30 in the situation illustrated in the lower part.

In the image 37 illustrated in Fig. 11, the irradiation markers 65 are densely arranged only in a partial image region.

A state where the markers are excessively dense or excessively sparse is undesirable for a tracking algorithm, and causes a decrease in estimation accuracy.

However, in a case where the camera 30 and an IR light source are separated as in the present embodiment, the scale, the display region, and the like of the irradiation marker 65 in the image 37 captured by the camera 30 change according to the positional relationship between the camera and the IR light source, and thus a situation in which the distribution of the irradiation marker 65 becomes inappropriate is likely to occur.

The technical idea according to the second embodiment of the present disclosure has been conceived of by focusing on the above-described points, and implements appropriate marker irradiation distribution.

Hereinafter, a configuration example of a system 2 according to the second embodiment of the present disclosure will be described in detail.

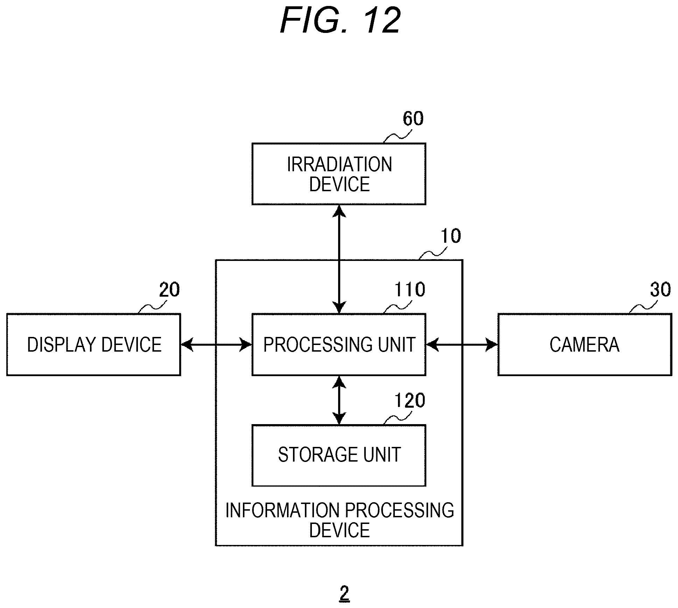

Fig. 12 is a block diagram illustrating the configuration example of the system 2 according to the second embodiment of the present disclosure.

As illustrated in Fig. 12, the system 2 according to the second embodiment includes the information processing device 10, the display device 20, the camera 30, and the irradiation device 60.

Note that, hereinafter, differences from the first embodiment will be mainly described, and detailed description of functions, effects, and the like common to the first embodiment will be omitted.

### (Information processing device 10)

The information processing device 10 according to the present embodiment includes the processing unit 110 and the storage unit 120.

One of the features of the processing unit 110 according to the present embodiment is that the processing unit functions as an irradiation control unit that controls irradiation of the irradiation marker 65 by the irradiation device 60.

Furthermore, one of the features of the processing unit 110 according to the present embodiment is that the processing unit functions as an evaluation unit that evaluates the irradiation distribution of the irradiation marker 65 in tracking the position and orientation of the camera 30 that images the irradiation marker 65 irradiated by the irradiation device 60.

Details of functions of the processing unit 110 according to the present embodiment will be described later.

Note that the processing unit 110 according to the present embodiment is connected to the display device 20, the camera 30, and the irradiation device 60 in a wired or wireless manner.

### (Storage unit 120)

The storage unit 120 according to the present embodiment stores various types of information used by the system 2.

### (Camera 30)

The camera 30 according to the present embodiment may be substantially the same as the camera 30 according to the first embodiment, but does not need to be mounted in the same housing as that of the IR light source.

Furthermore, the camera 30 according to the present embodiment may include an event-based vision sensor (EVS) as described later. The EVS is a vision sensor that detects a change in luminance of each pixel and outputs data in which the luminance has changed in combination with coordinates and time information to realize high-speed and low-delay data output.

### (Irradiation device 60)

The irradiation device 60 according to the present embodiment irradiates the irradiation marker 65 under the control of the processing unit 110.

The irradiation device 60 according to the present embodiment may include a diffractive optical element (DOE). The DOE is an element capable of spatially branching laser light using a diffraction phenomenon of light.

On the other hand, the irradiation device 60 according to the present embodiment may be a galvano scanner. The galvano scanner is a device that radiates laser light with high accuracy at pinpoint by adjusting a biaxial or triaxial laser light reflecting mirror.

In a case where the galvano scanner is adopted as the irradiation device 60, various irradiation patterns can be realized by controlling the laser light reflecting mirror.

Furthermore, as described later, the irradiation device 60 according to the present embodiment may perform light detection and ranging (LiDAR) under the control of the processing unit 110.

The configuration example of the system 2 according to the present embodiment has been described above. Note that the configuration described above with reference to Fig. 12 is merely an example, and the configuration of the system 2 according to the present embodiment is not limited to such an example.

The configuration of the system 2 according to the present embodiment can be flexibly modified according to specifications, operations, and the like.

For example, the system 2 may include two or more cameras 30 and two or more irradiation devices 60.

### <<2.2. Details>>

Next, functions of the system 2 according to the present embodiment will be described in detail.

As described above, in order to ensure the accuracy of the estimation of the position and orientation of the camera 30, the irradiation distribution of the irradiation marker 65 is required to be appropriate.

In order to realize the above, the processing unit 110 according to the present embodiment functions as an evaluation unit that evaluates the appropriateness of the irradiation distribution of the irradiation marker 65.

For example, the processing unit 110 according to the present embodiment may evaluate the irradiation distribution of the irradiation markers 65 on the basis of the density of the irradiation markers 65 in the image 37 captured by the camera 30.

The processing unit 110 according to the present embodiment may evaluate the irradiation distribution of the irradiation marker 65 by comparing the density of the irradiation marker 65 in the image 37 with the reference of the density obtained by the adopted tracking algorithm.

Furthermore, for example, the processing unit 110 according to the present embodiment may evaluate the irradiation distribution of the irradiation marker 65 on the basis of a region where the irradiation marker 65 does not exist in the image 37 captured by the camera 30.

The processing unit 110 according to the present embodiment may evaluate the irradiation distribution of the irradiation marker 65 by comparing the region where the irradiation marker 65 does not exist in the image 37 with the reference of the region obtained by the adopted tracking algorithm.

Furthermore, for example, the processing unit 110 according to the present embodiment may divide the image 37 captured by the camera 30 into a plurality of grids of M×N, and evaluate the irradiation distribution of the irradiation markers 65 on the basis of the number of the irradiation markers 65 in each of the plurality of grids.

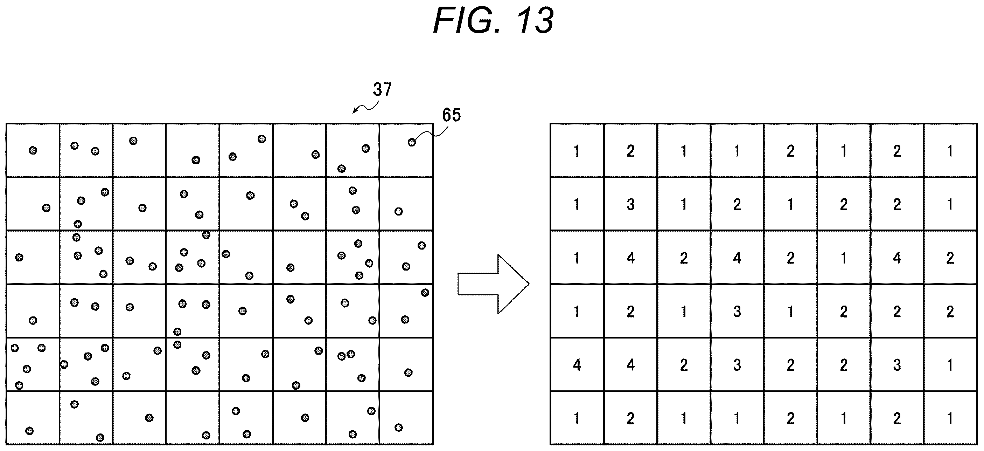

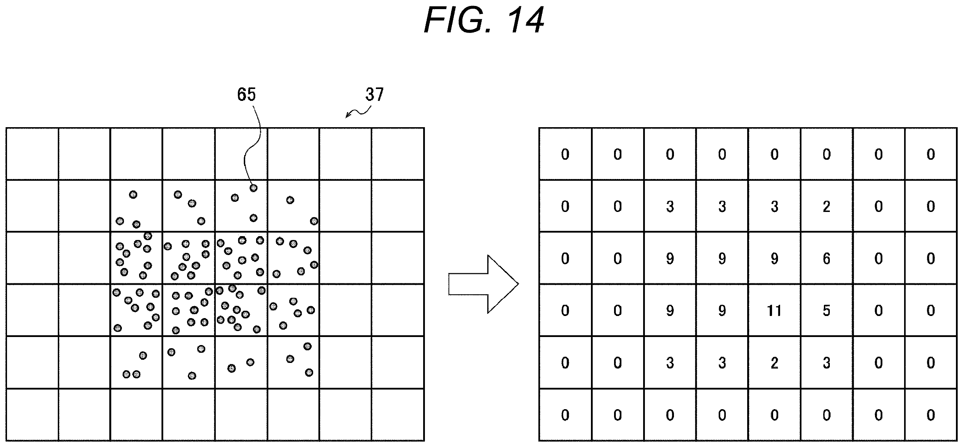

Figs. 13 and 14 are diagrams for explaining evaluation using the grids according to the present embodiment.

An example in which the image 37 captured by the camera 30 is divided into 6×8 grids is illustrated on the left side of Figs. 13 and 14.

Furthermore, a result of counting the number of irradiation markers 65 existing in each grid is illustrated on the right side of Figs. 13 and 14.

In the example illustrated in Fig. 13, the irradiation markers 65 exist in all the grids, and the maximum number of irradiation markers 65 in the grid is suppressed to 4.

As described above, in a case where the irradiation markers 65 exist substantially evenly in each grid, the processing unit 110 according to the present embodiment may evaluate that the irradiation distribution of the irradiation markers 65 is appropriate.

On the other hand, in the example illustrated in Fig. 14, the irradiation marker 65 does not exist in more than half of the grids, and the maximum number of the irradiation markers 65 in the grid is 11. That is, in the example illustrated in Fig. 14, the irradiation markers 65 are locally densely arranged.

As described above, in a case where the density of the irradiation markers 65 in some of the grids is detected, the processing unit 110 according to the present embodiment may evaluate that the irradiation distribution of the irradiation markers 65 is inappropriate.

Note that an evaluation criterion by the processing unit 110 may be appropriately designed according to the tracking algorithm to be adopted.

Furthermore, the processing unit 110 according to the present embodiment may cause the display device 20 to display the evaluation result as described above.

According to this, the user who has confirmed the evaluation result by the display device 20 can adjust the position and orientation of the camera 30, the position and orientation of the irradiation device 60, and the irradiation pattern (irradiation range, scale, or the like) to make the irradiation distribution of the irradiation marker 65 appropriate.

For example, after installing the irradiation device 60, the user may adjust the irradiation pattern of the irradiation device 60 until the irradiation distribution of the irradiation marker 65 is evaluated as appropriate by the processing unit 110 in a state where the camera 30 is arranged near the center of the operation range.

On the other hand, the adjustment of the irradiation range, scale, and the like of the irradiation device 60 may be automatically performed by the processing unit 110. That is, the processing unit 110 according to the present embodiment may control the irradiation pattern of the irradiation marker 65 by the irradiation device 60 on the basis of the evaluation of the irradiation distribution of the irradiation marker 65.

For example, the processing unit 110 according to the present embodiment may repeat the change of the irradiation pattern of the irradiation marker 65 until the evaluation of the irradiation distribution of the irradiation marker 65 satisfies a predetermined criterion.

For example, the processing unit 110 according to the present embodiment may search for appropriate parameters of the irradiation range, scale, and the like of the irradiation device 60 by using a search algorithm in order to obtain the irradiation distribution of the irradiation markers 65 satisfying the predetermined criterion.

As described above, according to the evaluation of the irradiation distribution of the irradiation marker 65 according to the present embodiment, the irradiation pattern of the irradiation device 60 can be adjusted manually or automatically.

Note that, in a case where the evaluation and adjustment regarding the position and orientation of a certain camera 30 are completed, a plurality of evaluations may be performed regarding a plurality of positions and orientations by moving the camera 30 within a movable range. In this case, the irradiation pattern of the irradiation device 60 may be adjusted such that the plurality of evaluations regarding the plurality of positions and orientations is maximized.

Furthermore, in a case where a plurality of evaluations is performed for a plurality of positions and orientations, it is also possible to obtain a scale-indefinite three-dimensional position of the irradiation marker 65 by triangulation and utilize the irradiation pattern of the irradiation device 60 for adjustment. Furthermore, in a case where an inertial measurement unit (IMU) included in the camera 30 is provided, it is also possible to acquire data in which a physical scale is given to the obtained scale-indefinite three-dimensional position and utilize the data for adjustment of the irradiation pattern of the irradiation device 60.

Here, regarding a setup procedure of the real tracking of the camera 30, a difference between the case of using a retroreflective material marker and the case of using the irradiation marker 65 will be described.

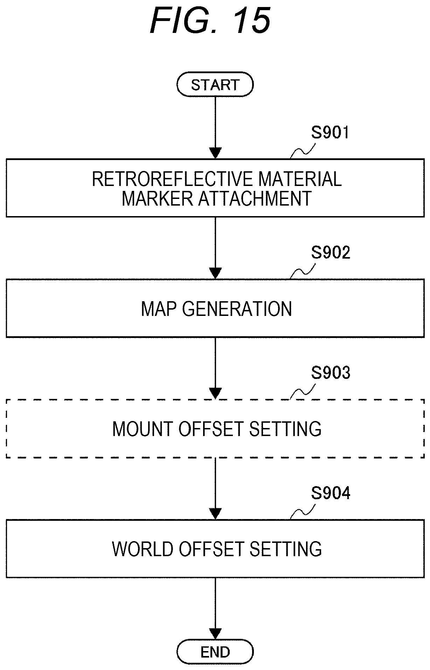

Fig. 15 is a flowchart illustrating the setup procedure in a case where the retroreflective material marker is used.

The setup procedure in the case of using the retroreflective material marker includes retroreflective material marker attachment (S901), map generation (S902), mount offset setting (S903), and world offset setting (S904).

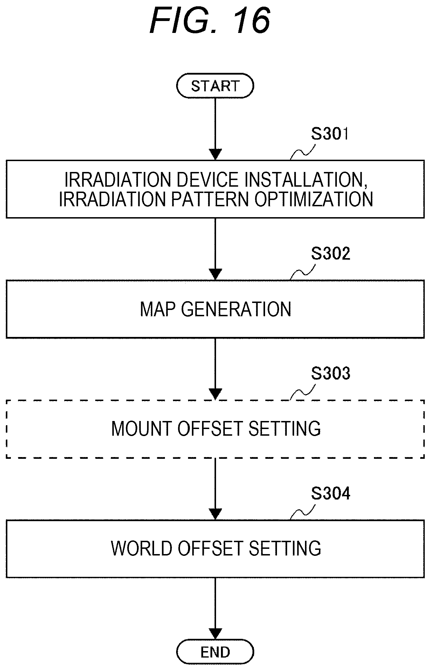

On the other hand, Fig. 16 is a flowchart illustrating a setup procedure in a case where the irradiation marker 65 according to the present embodiment is used.

The setup procedure in the case of using the irradiation marker 65 according to the present embodiment includes installation of the irradiation device 60, optimization of the irradiation pattern of the irradiation device 60 (S301), map generation (S302), mount offset setting (S303), and world offset setting (S304).

The processing in step S301 is as described above.

The map generation in step S302 is processing of obtaining the three-dimensional coordinates of each marker, and is the same as the processing in step S102 in the case of using the retroreflective material marker. For the map generation, it is required to change the camera 30 to various positions and orientations to image the marker.

The mount offset setting in step S303 is processing of setting an offset between the camera 30 to be tracked and a cinema camera, and is the same as the processing in step S103 in the case of using the retroreflective material marker. The mount offset setting is required to be reset in a case where the relationship between the positions and orientations of both cameras is changed.

The world offset setting in step S304 is processing of aligning the three-dimensional coordinates of the marker with a reference coordinate system, and is the same as the processing in step S104 in the case of using the retroreflective material marker. The world offset setting is always performed after the map generation is executed.

Hereinbefore, regarding the setup procedure of the real tracking of the camera 30, the difference between the case of using the retroreflective material marker and the case of using the irradiation marker 65 has been described.

Next, a case where the irradiation device 60 according to the present embodiment performs LiDAR under the control of the processing unit 110 will be described.

The irradiation marker 65 according to the present embodiment may be formed by laser light radiated in the LiDAR by the irradiation device 60. In this case, the processing unit 110 according to the present embodiment controls the irradiation of the laser light in the LiDAR by the irradiation device 60.

In general, LiDAR ranging points are aligned at equal intervals. However, in the tracking of the camera 30 according to the present embodiment, each of the irradiation markers 65 is identified on the basis of the positional relationship between the irradiation markers 65.

Therefore, the processing unit 110 according to the present embodiment may perform control such that the intervals of the irradiation markers 65 generated by the laser light are not equal in the LiDAR by the irradiation device 60.

For example, the processing unit 110 according to the present embodiment may control the irradiation device 60 such that the interval between the irradiation markers 65 is random.

According to the control as described above, highly accurate tracking using LiDAR can be realized.

Furthermore, in a case where the irradiation device 60 performs LiDAR, the three-dimensional position of the irradiation marker 65 with a physical scale can be acquired by the irradiation device 60 alone.

Next, control of the irradiation pattern in a case where the irradiation device 60 performs LiDAR will be described.

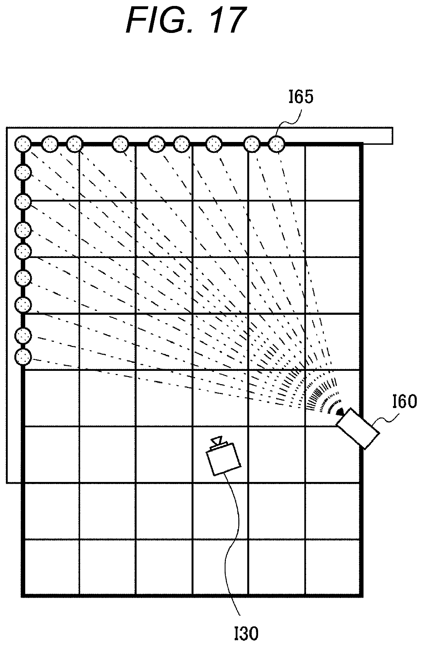

Fig. 17 is a diagram for explaining an example of controlling an irradiation pattern in a case where the irradiation device 60 according to the present embodiment performs LiDAR.

Fig. 17 illustrates an example of a Graphical User Interface (GUI) controlled by the processing unit 110.

For example, as illustrated in Fig. 17, the processing unit 110 according to the present embodiment visualizes an icon I60 indicating the position and orientation of the irradiation device 60 in the imaging space and an icon I65 indicating the position of the irradiation marker 65 irradiated by the irradiation device 60 to present to the user.

The user may be able to designate the movable range of the camera 30 using the icon I60 and the icon I65 as marks (in Fig. 17, the movable range is indicated by a thick frame). Note that the movable range is a reference value, and thus may be roughly designated.

The processing unit 110 according to the present embodiment divides the designated movable range into a plurality of grids and presents the grids to the user.

By arranging an icon I30 indicating the position and orientation of the camera 30 on the presented grids, the user may be able to simulate how the irradiation marker 65 appears on the camera 30 in the position and orientation corresponding to the arrangement.

Furthermore, the processing unit 110 may perform an approximate simulation of how the image 37 appears in the space designated by the user by performing calculation while changing the orientation of the camera 30 by a plurality of patterns.

Furthermore, the processing unit 110 may optimize the result of the simulation as described above, and may automatically search for a parameter related to the irradiation pattern of the irradiation device 60 so that the tracking algorithm stably operates at any position.

Next, a setup procedure in a case where the irradiation device 60 according to the present embodiment performs LiDAR will be described.

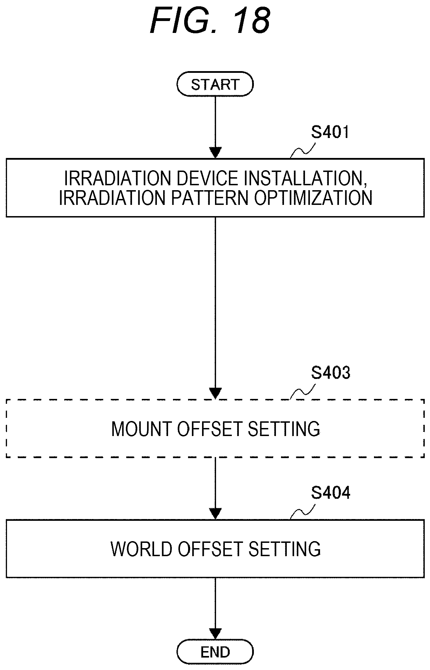

Fig. 18 is a flowchart illustrating a setup procedure in a case where the irradiation device 60 according to the present embodiment performs LiDAR.

In a case where the irradiation device 60 performs LiDAR, the setup procedure includes the installation of the irradiation device 60, the optimization of the irradiation pattern of the irradiation device 60 (S401), mount offset setting (S403), and world offset setting (S404).

In a case where the irradiation device 60 performs LiDAR, the map generation can be skipped since the three-dimensional position of each of the irradiation markers 65 has been obtained by the processing in step S401.

Furthermore, by skipping the map generation, it becomes unnecessary to move around in order to move the camera 30 in the imaging space, and a risk of interference with setup work other than tracking can be reduced.

Note that the processing unit 110 may set the three-dimensional coordinates of the irradiation marker 65 measured by LiDAR as an initial value, and may improve the initial value on the basis of the image 37 obtained during tracking, the acquired value of the IMU, and the like.

The setup procedure in a case where the irradiation device 60 according to the present embodiment performs LiDAR has been described above.

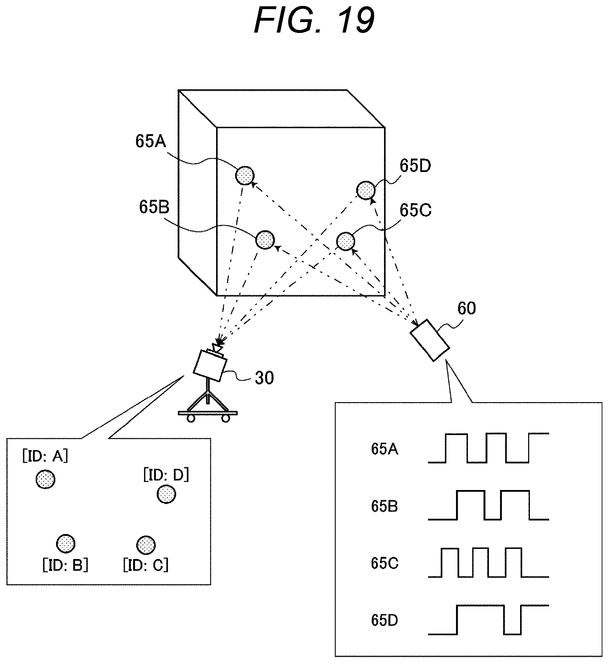

Next, control of a blinking pattern of the irradiation marker 65 in LiDAR according to the present embodiment will be described with reference to Fig. 19.

The processing unit 110 according to the present embodiment may control the laser light scanning in LiDAR such that the blinking patterns of the irradiation markers 65 generated by laser light are different from each other.

Specifically, the processing unit 110 according to the present embodiment may perform intensity modulations different from each other on the laser light associated with the irradiation markers 65.

At this time, according to the camera 30 including the EVS, it is possible to detect a unique blinking pattern for each of the irradiation markers 65 generated by the laser light subjected to the intensity modulations different from each other. Furthermore, the ID of each irradiation marker 65 can be identified on the basis of the detected blinking pattern and a stored combination of the blinking pattern and the ID.

As described above, in a general tracking system, each marker has no feature, and each marker is identified on the basis of a positional relationship between markers. Therefore, it is required to randomly arrange a plurality of markers.

However, according to the control of the blinking pattern of the irradiation marker 65 according to the present embodiment, the arrangement of the irradiation markers 65 is not necessarily random, and may be arranged at equal intervals.

Furthermore, since the EVS is significantly lighter in processing than a general IR camera, high-speed processing can be performed even with small calculation resources.

Note that since the three-dimensional position of each of the irradiation markers 65 is known by LiDAR distance measurement, the position and orientation of the camera 30 including the EVS can be obtained by solving a PnP problem by using the position of the irradiation marker 65 on the image 37 and the position of the irradiation marker 65 in the three-dimensional space.

The second embodiment of the present disclosure has been described above.

Note that in the first embodiment, a case where the fixed marker 45 and the movable marker 55 are retroreflective materials or the like has been described, but the fixed marker 45 and the movable marker 55 may be formed by laser light similarly to in the second embodiment.

In this case, a position change based on the movement of the movable rigid body 50 of the movable marker 55 formed by the laser light is calculated in advance, so that it is possible to absorb the position change.

The processing unit 110 may correct the three-dimensional position of the movable marker 55 on the basis of calculation in advance, or may adjust the irradiation pattern of the movable marker 55 on the basis of calculation in advance.

### <3. Hardware Configuration Example>

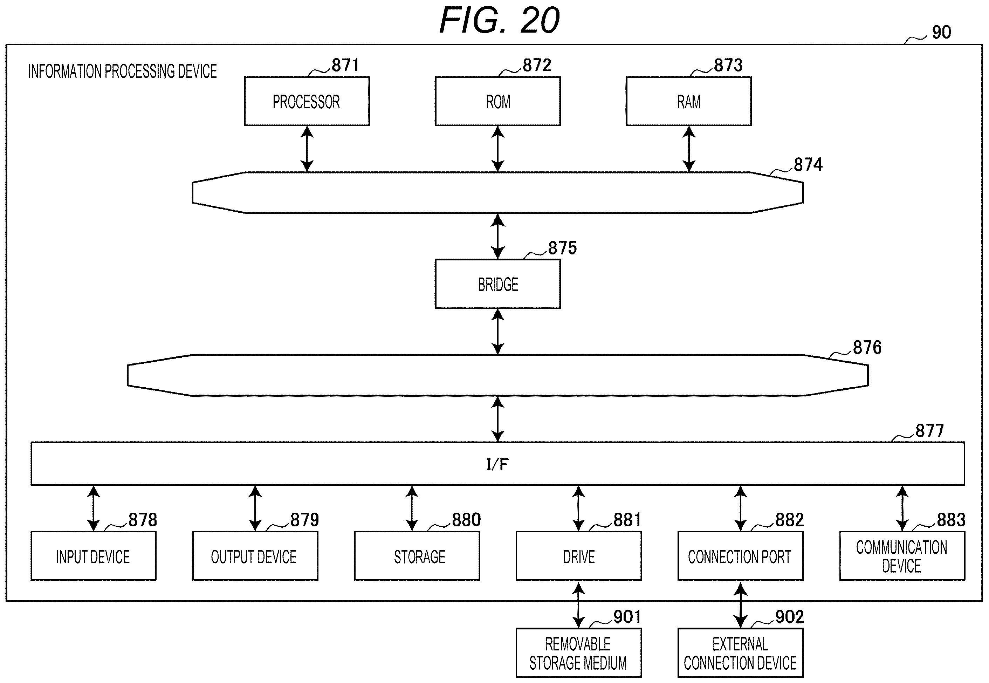

Next, a hardware configuration example of an information processing device 90 according to an embodiment of the present disclosure will be described. Fig. 20 is a block diagram illustrating the hardware configuration example of the information processing device 90 according to the embodiment of the present disclosure. The information processing device 90 may be a device having a hardware configuration equivalent to that of the information processing device 10 according to the first embodiment and the information processing device 10 according to the second embodiment.

As illustrated in Fig. 20, the information processing device 90 includes, for example, a processor 871, a read-only memory (ROM) 872, a random access memory (RAM) 873, a host bus 874, a bridge 875, an external bus 876, an interface 877, an input device 878, an output device 879, a storage 880, a drive 881, a connection port 882, and a communication device 883. Note that the hardware configuration illustrated here is an example, and some of the components may be omitted. Furthermore, components other than the components illustrated here may be further included.

### (Processor 871)

The processor 871 functions as, for example, an arithmetic processing device or a control device, and controls the overall operation of each component or a part thereof on the basis of various programs recorded in the ROM 872, the RAM 873, the storage 880, or a removable storage medium 901.

### (ROM 872 and RAM 873)

The ROM 872 is a means for storing a program to be read into the processor 871, data to be used for calculation, and the like. The RAM 873 temporarily or permanently stores, for example, a program to be read into the processor 871, various parameters that appropriately change when the program is executed, and the like.

### (Host bus 874, Bridge 875, External bus 876, and Interface 877)

The processor 871, the ROM 872, and the RAM 873 are mutually connected via, for example, the host bus 874 capable of high-speed data transmission. Meanwhile, the host bus 874 is connected to the external bus 876 having a relatively low data transmission speed via the bridge 875, for example. Furthermore, the external bus 876 is connected to various components via the interface 877.

### (Input device 878)

As the input device 878, for example, a mouse, a keyboard, a touch panel, a button, a switch, a lever, or the like is used. Moreover, as the input device 878, a remote controller (hereinafter referred to as a remote) capable of transmitting a control signal using infrared rays or other radio waves may be used. Furthermore, the input device 878 includes a voice input device such as a microphone.

### (Output device 879)

The output device 879 is a device capable of visually or auditorily notifying the user of acquired information, such as a display device such as a cathode ray tube (CRT), a liquid crystal display (LCD), an organic electroluminescence (EL), or the like, an audio output device such as a speaker, a headphone, or the like, a printer, a mobile phone, a facsimile, or the like. Furthermore, the output device 879 according to the present disclosure includes various vibration devices capable of outputting a haptic stimulus.

### (Storage 880)

The storage 880 is a device for storing various types of data. As the storage 880, for example, a magnetic storage device such as a hard disk drive (HDD) or the like, a semiconductor storage device, an optical storage device, a magneto-optical storage device, or the like is used.

### (Drive 881)

The drive 881 is, for example, a device that reads information recorded in the removable storage medium 901 such as a magnetic disk, an optical disk, a magneto-optical disk, a semiconductor memory or the like, or writes information in the removable storage medium 901.

### (Removable storage medium 901)

The removable storage medium 901 is, for example, a digital versatile disc (DVD) medium, a Blu-ray (registered trademark) medium, an HD DVD medium, various semiconductor storage media, or the like. It is needless to say that the removable storage medium 901 may be, for example, an integrated circuit (IC) card on which a non-contact IC chip is mounted, an electronic device, or the like.

### (Connection port 882)

The connection port 882 is a port for connecting an external connection device 902 such as a universal serial bus (USB) port, an IEEE 1394 port, a small computer system interface (SCSI), an RS-232C port, an optical audio terminal, or the like.

### (External connection device 902)

The external connection device 902 is, for example, a printer, a portable music player, a digital camera, a digital video camera, an IC recorder, or the like.

### (Communication device 883)

The communication device 883 is a communication device for connecting to a network, and is, for example, a wired or wireless local area network (LAN), Bluetooth (registered trademark), a communication card for wireless USB (WUSB), a router for optical communication, a router for asymmetric digital subscriber line (ADSL), a modem for various types of communication, or the like.

### <4. Summary>

As described above, the information processing device 10 according to an embodiment of the present disclosure includes the processing unit 110 that rewrites second map data including position information of a plurality of movable markers 55 arranged on the movable rigid body 50 on the basis of a first position and orientation related to the camera 30, the first position and orientation being estimated on the basis of an image captured by the camera 30 and first map data including position information of a plurality of fixed markers 45 arranged on the non-movable body 40, and a second position and orientation related to the camera 30, the second position and orientation being estimated on the basis of the image and the second map data.

According to the configuration described above, it is possible to greatly improve the calibration efficiency of the movable marker arranged on the movable rigid body.

The preferred embodiments of the present disclosure have been described above in detail with reference to the accompanying drawings, but the technical scope of the present disclosure is not limited to such examples. It is obvious that those with ordinary skill in the technical field of the present disclosure can conceive various alterations or corrections within the scope of the claims, and it is naturally understood that these alterations or corrections also fall within the technical scope of the present disclosure.

Furthermore, each step relating to a process described in the present disclosure is not necessarily processed in time series in the order described in a flowchart or a sequence diagram. For example, individual steps related to the processes of individual devices may be processed in an order different from the described order, or may be processed in parallel.

Furthermore, a series of processing performed by each device described in the present disclosure may be implemented by a program stored in a non-transitory computer readable storage medium. For example, each program is read into the RAM when the computer executes the program, and is executed by a processor such as a CPU. The storage medium described above is, for example, a magnetic disk, an optical disc, a magneto-optical disk, a flash memory, or the like. Furthermore, the program described above may be distributed via, for example, a network without using a storage medium.

Furthermore, the effects described in the present specification are merely exemplary or illustrative, and not restrictive. In other words, the technique according to the present disclosure can produce other effects that are apparent to those skilled in the art from the description of the present description, in combination with or instead of the effects described above.

### REFERENCE SIGNS LIST

- 1, 2: System
- 10: Information processing device
- 110: Processing unit
- 120: Storage unit
- 20: Display device
- 30: Camera
- 40: Non-movable body
- 45: Fixed marker
- 50: Movable rigid body
- 55: Movable marker
- 60: Irradiation device
- 65: Irradiation marker

## Claims

1. An information processing device comprising:
a processing unit that rewrites second map data including position information of a plurality of movable markers arranged on a movable rigid body, on a basis of
a first position and orientation related to a camera, the first position and orientation being estimated on a basis of an image captured by the camera and first map data including position information of a plurality of fixed markers arranged on a non-movable body, and
a second position and orientation related to the camera, the second position and orientation being estimated on a basis of the image and the second map data.

2. The information processing device according to claim 1, wherein
the processing unit calculates a movement amount of the movable rigid body on a basis of the first position and orientation and the second position and orientation, and rewrites the second map data on a basis of the movement amount.

3. The information processing device according to claim 1, wherein
a positional relationship among a plurality of the movable markers is invariable regardless of movement of the movable rigid body.

4. The information processing device according to claim 1, wherein
the image used for estimation of the first position and orientation and the second position and orientation is captured by the camera in a same position and orientation.

5. The information processing device according to claim 1, wherein
the image used for estimation of the first position and orientation and the second position and orientation includes, as subjects, at least four of the fixed markers and at least four of the movable markers.

6. The information processing device according to claim 1, wherein
the processing unit generates the first map data and the second map data from 0-th map data including position information of a plurality of the fixed markers and position information of a plurality of the movable markers.

7. The information processing device according to claim 6, wherein
the processing unit controls a user interface for separating the fixed marker and the movable marker.

8. The information processing device according to claim 1, wherein
the movable rigid body includes a display device.

9. The information processing device according to claim 1, wherein
the movable rigid body moves at least in a vertical direction.

10. The information processing device according to claim 1, wherein
the fixed marker and the movable marker include a retroreflective material.

11. The information processing device according to claim 1, wherein
the fixed marker and the movable marker are irradiated by an irradiation device.

12. A system comprising:
the information processing device according to claim 1;
the camera;
a plurality of the fixed markers; and
a plurality of the movable markers.

13. An information processing method comprising:
rewriting, by a processor, second map data including position information of a plurality of movable markers arranged on a movable rigid body, on a basis of
a first position and orientation related to a camera, the first position and orientation being estimated on a basis of an image captured by the camera and first map data including position information of a plurality of fixed markers arranged on a non-movable body, and
a second position and orientation related to the camera, the second position and orientation being estimated on a basis of the image and the second map data.

14. A program for causing a computer to function as:
an information processing device including
a processing unit that rewrites second map data including position information of a plurality of movable markers arranged on a movable rigid body, on a basis of
a first position and orientation related to a camera, the first position and orientation being estimated on a basis of an image captured by the camera and first map data including position information of a plurality of fixed markers arranged on a non-movable body, and
a second position and orientation related to the camera, the second position and orientation being estimated on a basis of the image and the second map data.

## Patentansprüche

1. Informationsverarbeitungsvorrichtung, umfassend:
eine Verarbeitungseinheit, die zweite Kartendaten umschreibt, einschließlich Positionsinformationen einer Vielzahl von beweglichen Markern, die auf einem beweglichen starren Körper angeordnet sind, auf Basis von
einer ersten Position und Ausrichtung in Bezug auf eine Kamera, wobei die erste Position und Ausrichtung auf Basis eines Bildes, das durch die Kamera aufgenommen wird, und erster Kartendaten geschätzt werden, einschließlich Positionsinformationen einer Vielzahl von festen Markern, die auf einem nicht beweglichen Körper angeordnet sind, und
einer zweiten Position und Ausrichtung in Bezug auf die Kamera, wobei die zweite Position und Ausrichtung auf Basis des Bildes und der zweiten Kartendaten geschätzt werden.

2. Informationsverarbeitungsvorrichtung nach Anspruch 1, wobei
die Verarbeitungseinheit einen Bewegungsbetrag des beweglichen starren Körpers auf Basis der ersten Position und Ausrichtung und der zweiten Position und Ausrichtung berechnet und die zweiten Kartendaten auf Basis des Bewegungsbetrags umschreibt.

3. Informationsverarbeitungsvorrichtung nach Anspruch 1, wobei
eine Positionsbeziehung unter einer Vielzahl der beweglichen Marker unabhängig von der Bewegung des beweglichen starren Körpers unveränderlich ist.

4. Informationsverarbeitungsvorrichtung nach Anspruch 1, wobei
das Bild, das für eine Schätzung der ersten Position und Ausrichtung und der zweiten Position und Ausrichtung verwendet wird, durch die Kamera in einer gleichen Position und Ausrichtung aufgenommen wird.

5. Informationsverarbeitungsvorrichtung nach Anspruch 1, wobei
das Bild, das für die Schätzung der ersten Position und Ausrichtung und der zweiten Position und Ausrichtung verwendet wird, als Objekte mindestens vier der festen Marker und mindestens vier der beweglichen Marker einschließt.

6. Informationsverarbeitungsvorrichtung nach Anspruch 1, wobei
die Verarbeitungseinheit die ersten Kartendaten und die zweiten Kartendaten aus 0-ten Kartendaten erzeugt, einschließlich Positionsinformationen einer Vielzahl der festen Marker und Positionsinformationen einer Vielzahl der beweglichen Marker.

7. Informationsverarbeitungsvorrichtung nach Anspruch 6, wobei
die Verarbeitungseinheit eine Benutzerschnittstelle zum Trennen des festen Markers und des beweglichen Markers.

8. Informationsverarbeitungsvorrichtung nach Anspruch 1, wobei
der bewegliche starre Körper eine Anzeigevorrichtung einschließt.

9. Informationsverarbeitungsvorrichtung nach Anspruch 1, wobei
sich der bewegliche starre Körper mindestens in einer vertikalen Richtung bewegt.

10. Informationsverarbeitungsvorrichtung nach Anspruch 1, wobei
der feste Marker und der bewegliche Marker retroreflektierendes Material einschließen.

11. Informationsverarbeitungsvorrichtung nach Anspruch 1, wobei
der feste Marker und der bewegliche Marker durch eine Bestrahlungsvorrichtung bestrahlt werden.

12. System, umfassend:
die Informationsverarbeitungsvorrichtung nach Anspruch 1;
die Kamera;
eine Vielzahl von festen Markern; und
eine Vielzahl der beweglichen Marker.

13. Informationsverarbeitungsverfahren, umfassend:
Umschreiben, durch einen Prozessor, von zweiten Kartendaten, einschließlich Positionsinformationen einer Vielzahl von beweglichen Markern, die auf einem beweglichen starren Körper angeordnet sind, auf Basis von
einer ersten Position und Ausrichtung in Bezug auf eine Kamera, wobei die erste Position und Ausrichtung auf Basis eines Bildes, das durch die Kamera aufgenommen wird, und erster Kartendaten geschätzt werden, einschließlich Positionsinformationen einer Vielzahl von festen Markern, die auf einem nicht beweglichen Körper angeordnet sind, und
einer zweiten Position und Ausrichtung in Bezug auf die Kamera, wobei die zweite Position und Ausrichtung auf Basis des Bildes und der zweiten Kartendaten geschätzt werden.

14. Programm zum Verursachen, dass ein Computer arbeitet als:
Informationsverarbeitungsvorrichtung, die einschließt:
eine Verarbeitungseinheit, die zweite Kartendaten umschreibt, einschließlich Positionsinformationen einer Vielzahl von beweglichen Markern, die auf einem beweglichen starren Körper angeordnet sind, auf Basis von
einer ersten Position und Ausrichtung in Bezug auf eine Kamera, wobei die erste Position und Ausrichtung auf Basis eines Bildes, das durch die Kamera aufgenommen wird, und erster Kartendaten geschätzt werden, einschließlich Positionsinformationen einer Vielzahl von festen Markern, die auf einem nicht beweglichen Körper angeordnet sind, und
einer zweiten Position und Ausrichtung in Bezug auf die Kamera, wobei die zweite Position und Ausrichtung auf Basis des Bildes und der zweiten Kartendaten geschätzt werden.

## Revendications

1. Dispositif de traitement d'informations comprenant :
une unité de traitement qui réécrit de secondes données cartographiques comportant des informations de position d'une pluralité de repères mobiles agencés sur un corps rigide mobile, sur une base
d'une première position et d'une première orientation relatives à une caméra, la première position et la première orientation étant estimées sur une base d'une image capturée par la caméra et de premières données cartographiques comportant des informations de position d'une pluralité de repères fixes agencés sur un corps non mobile, et
une seconde position et une seconde orientation relatives à la caméra, la seconde position et la seconde orientation étant estimées sur une base de l'image et des secondes données cartographiques.

2. Dispositif de traitement d'informations selon la revendication 1, dans lequel
l'unité de traitement calcule une quantité de mouvement du corps rigide mobile sur une base de la première position et de la première orientation et de la seconde position et de la seconde orientation, et réécrit les secondes données cartographiques sur une base de la quantité de mouvement.

3. Dispositif de traitement d'informations selon la revendication 1, dans lequel
une relation de position parmi une pluralité de repères mobiles est invariable indépendamment du mouvement du corps rigide mobile.

4. Dispositif de traitement d'informations selon la revendication 1, dans lequel
l'image utilisée pour l'estimation de la première position et de la première orientation, et de la seconde position et de la seconde orientation, est capturée par la caméra dans une même position et orientation.

5. Dispositif de traitement d'informations selon la revendication 1, dans lequel
l'image utilisée pour l'estimation de la première position et de la première orientation, ainsi que de la seconde position et de la seconde orientation, comporte, comme sujets, au moins quatre des repères fixes et au moins quatre des repères mobiles.

6. Dispositif de traitement d'informations selon la revendication 1, dans lequel
l'unité de traitement génère les premières données cartographiques et les secondes données cartographiques à partir de 0-ièmes données cartographiques comportant des informations de position d'une pluralité des repères fixes et des informations de position d'une pluralité de repères mobiles.

7. Dispositif de traitement d'informations selon la revendication 6, dans lequel
l'unité de traitement commande une interface utilisateur permettant de séparer le repère fixe et le repère mobile.

8. Dispositif de traitement d'informations selon la revendication 1, dans lequel
le corps rigide mobile comporte un dispositif d'affichage.

9. Dispositif de traitement d'informations selon la revendication 1, dans lequel
le corps rigide mobile se déplace au moins dans une direction verticale.

10. Dispositif de traitement d'informations selon la revendication 1, dans lequel
le repère fixe et le repère mobile comportent un matériau rétroréfléchissant.

11. Dispositif de traitement d'informations selon la revendication 1, dans lequel
le repère fixe et le repère mobile sont irradiés par un dispositif d'irradiation.

12. Système comprenant :
le dispositif de traitement d'informations selon la revendication 1 ;
la caméra ;
une pluralité des repères fixes ; et
une pluralité des repères mobiles.

13. Procédé de traitement d'informations comprenant :
la réécriture, par un processeur, de secondes données cartographiques comportant des informations de position d'une pluralité de repères mobiles agencés sur un corps rigide mobile, sur une base
d'une première position et d'une première orientation relatives à une caméra, la première position et la première orientation étant estimées sur une base d'une image capturée par la caméra et de premières données cartographiques comportant des informations de position d'une pluralité de repères fixes agencés sur un corps non mobile, et
une seconde position et une seconde orientation relatives à la caméra, la seconde position et la seconde orientation étant estimées sur une base de l'image et des secondes données cartographiques.

14. Programme permettant d'amener un ordinateur à fonctionner comme :
un dispositif de traitement d'informations comportant
une unité de traitement qui réécrit de secondes données cartographiques comportant des informations de position d'une pluralité de repères mobiles agencés sur un corps rigide mobile, sur une base
d'une première position et d'une première orientation relatives à une caméra, la première position et la première orientation étant estimées sur une base d'une image capturée par la caméra et de premières données cartographiques comportant des informations de position d'une pluralité de repères fixes agencés sur un corps non mobile, et
une seconde position et une seconde orientation relatives à la caméra, la seconde position et la seconde orientation étant estimées sur une base de l'image et des secondes données cartographiques.
